# EUROPÄISCHE PATENTSCHRIFT

(11) **EP 0 710 589 B1**
(45) Veröffentlichungstag und Bekanntmachung des Hinweises auf die Patenterteilung: **10.06.1998**
(21) Anmeldenummer: 95114370.0
(22) Anmeldetag: 13.09.1995
(51) Int. Cl.: B60R 21/06, B60R 5/04

(54) **Rückhaltevorrichtung für den Laderaum von Kraftfahrzeugen, wie z.B. für Kombinationskraftwagen oder Grossraum-Personenkraftwagen**
Restraint device for the luggage compartment of motor vehicles such as estate cars or large-volume passenger cars
Dispositif de retenue pour le compartiment à bagages de véhicules automobiles tels que véhicules de type break ou familial à grand volume intérieur

(30) Priorität: 03.11.1994 DE 4438910
(43) Veröffentlichungstag der Anmeldung: 08.05.1996
(73) Patentinhaber: PETER BUTZ GmbH & Co Verwaltungs-KG, 40764 Langenfeld (DE)
(72) Erfinder: Butz, Peter, D-40764 Langenfeld (DE)
(74) Vertreter: Patentanwälte Ostriga & Sonnet

(56) Entgegenhaltungen:
- DE-A- 3 332 695
- DE-A- 3 635 992
- DE-U- 9 417 435
- FR-A- 2 401 799
- US-A- 5 011 208

## Beschreibung

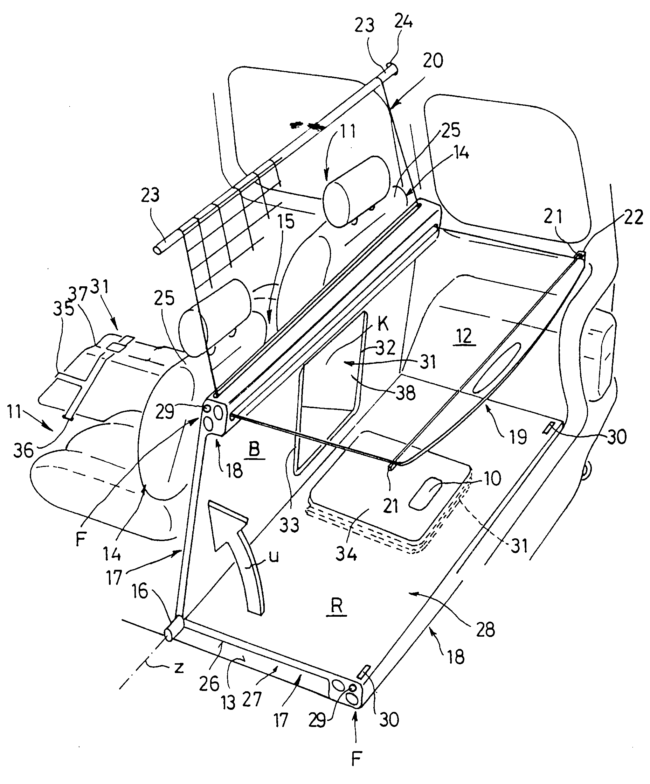

Die Erfindung betrifft eine Rückhaltevorrichtung für den Laderaum von Kraftfahrzeugen, wie z.B. für Kombinationskraftwagen oder Großraum-Personenkraftwagen, entsprechend dem Oberbegriff des Anspruchs 1. Eine Rückhaltevorrichtung dieser Gattung ist in der DE-A-36 35 992 (Fig. 5 und 6) beschrieben.

Die Rückhaltevorrichtung gemäß der DE-A-36 35 992 weist ein starres Rückhaltegitter mit mehreren Querstreben auf, welches zunächst den Fahrgastraum-Querschnitt hinter den Sitzlehnen abschirmt. Die unteren Enden von Seitenstreben des Rückhaltegitters bilden Scharniergelenke, so daß das gesamte starre Rückhaltegitter von seiner Ruheposition am Laderaumboden in seine aufrechte Betriebsposition hinter der Sitzreihe hochklappbar und dort als Trenneinheit arretierbar ist. An den beiden Seitenstreben des Rückhaltegitters ist ein Haltebügel teleskopartig ausziehbar befestigt, der in der Betriebsposition des Rückhaltegitters bis unter das Fahrzeugdach ausgezogen werden kann. Die obere Querstrebe des starren Rückhaltegitters ist zur Befestigung eines Netzes mit Verankerungsösen versehen, so daß das Netz zwischen den Verankerungsösen und der im Fahrzeugdachbereich befindlichen Bügel-Querstrebe fest installiert oder aufrollbar ausgebildet sein kann.

Wegen ihrer gegliederten Bauweise ist die vorbeschriebene bekannte Rückhaltevorrichtung umständlich zu bedienen. Zudem beeinträchtigt die gegliederte Bauweise des bekannten starren Rückhaltegitters die ungehinderte Benutzung des Laderaums, wenn sich das Rückhaltegitter in seiner Ruheposition befindet.

Eine mit der Rückhaltvorrichtung gemäß der DE-A-36 35 992 hinsichtlich vieler Merkmale vergleichbare Rückhaltevorrichtung ist zudem in der FR-A-26 45 479 beschrieben.

Von der DE-A- 40 10 209 ist eine bahnartige Rückhaltevorrichtung bekanntgeworden, welche hinter den Fond-Sitzlehnen im Abstand oberhalb vom Fahrzeugboden ein Wickelgehäuse aufweist. Dieses besitzt einen Stauraum für eine entgegen der Kraft eines Federmotors von einer Wickelwelle abrollbare und unterseitig des Karosseriedachs zu befestigende Rückhaltebahn in Form eines Haltenetzes. Derartige Rückhaltevorrichtungen sind bis zu einem gewissen Maße in der Lage, im Laderaum befindliche Güter daran zu hindern, in unvorhergesehener Weise in den Fahrgastraum zu gelangen. Andererseits werden derartige Rückhaltevorrichtungen bei Nichtgebrauch in der Ruheposition als lästig, hinderlich und störend empfunden.

Von der DE-A- 42 39 470 ist eine Rückhaltevorrichtung für den Laderaum von Kraftfahrzeugen, wie von Kombinationskraftwagen od. dgl., mit einem Rückhaltenetz bekannt, dessen Wickelgehäuse im Abstand unterhalb von karosseriedachseitigen Befestigungsstellen in einem in den Laderaumboden eingelassenen länglichen Stauraum aufgenommen ist. In seiner Sperrstellung reicht das Rückhaltenetz über den gesamten lichten Fahrgastraum-Querschnitt des Kraftfahrzeug-Innenraums.

Unter Berücksichtigung der vorbeschriebenen bekannten Rückhaltevorrichtungen liegt der Erfindung, ausgehend von der gattungsgemäßen Rückhaltevorrichtung gemäß der DE-A- 36 35 992, die Aufgabe zu Grunde, die Rückhaltevorrichtung so auszugestalten, daR sie ein Höchstmaß an Sicherheit bietet, sehr variabel an die vom Transportgut vorgegebenen Sicherheitsbedingungen anpaßbar ist und andererseits in ihrer Ruheposition nicht als störend empfunden wird.

Entsprechend der Erfindung wird diese Aufgabe dadurch gelöst, daß die Trenneinheit eine an der Schwenkachse klappbar befestigte, in ihrer Ruhepositon eine Ladefläche und in ihrer Betriebsposition eine Trennwand bildende, Trennplatte aufweist, deren von der Schwenkachse entfernter freier Endbereich von einer Aufnahme, wie Wickelgehäuse od. dgl., gebildet ist, aus welcher eine Rückhaltebahn und/oder ein Rückhaltenetz ausziehbar ist.

Die erfindungsgemäße Trennplatte bildet in ihrer Betriebsposition im Unterschied zum Trenngitter gemäß der DE-A- 36 35 992 eine feste Trennwand und bietet damit ein erhöhtes Maß an Sicherheit gegen vorrutschendes Ladegut. Die aufrechte Trennplatte stellt eine durchgehend feste Barriere im unteren Bereich des lichten Fahrgastraum-Querschnitts dar.

Zugleich trägt die Trennplatte an ihrem von der Schwenkachse entfernten freien Endbereich eine Aufnahme für eine planenartige Rückhaltebahn und/oder für ein Trennetz. Eine solche Aufnahme kann zweckmäßig nach Art eines Gehäuses ausgebildet sein, dessen axiale Länge der Länge des freien Endbereichs der Trennplatte entspricht. Das Gehäuse kann als Wickelgehäuse mit mindestens einer federmotorbetriebenen Wickelwelle ausgebildet sein. Wenn es also das Ladegut erfordert, zusätzliche Sicherheitsmaßnahmen zu treffen, kann entweder eine planenartige Rückhaltebahn und/oder ein Trennetz ausgezogen und an entsprechenden Karosserie-Befestigungsstellen lösbar gehalten werden.

So kann eine Rückhalteplane nach hinten über das Ladegut hinweg ausgebreitet und endseitig, z.B. neben der Hecktür des Fahrzeugs, karosserieseitig befestigt werden. Das zusätzlich oder alternativ zur Rückhalteplane vorgesehene Rückhaltenetz wird zweckmäßig senkrecht nach oben ausgezogen und an karosseriedachseitigen Befestigungsstellen lösbar arretiert.

Für den Fall, daß die Rückhaltevorrichtung nicht benötigt wird, werden die Rückhaltebahn bzw. das Rückhaltenetz gelöst und eingefahren und die Trennplatte insgesamt in ihre etwa horizontale Ruheposition am Laderaumboden zurückgeklappt. In ihrer Ruheposition erfüllt die Trennplatte die zusätzliche Funktion einer Ladefläche für den Fall, daß nach Entfernen der hinteren Sitzreihe eine vergrößerte Ladefläche für besondere Transporte verfügbar sein muß. Zugleich wird das Wickelgehäuse in der Ruheposition der Anordnung nicht als störend empfunden.

Erfindungsgemäß ist die Aufnahme für die Rückhaltebahn und/oder für das Trennetz zweckmäßig am freien Endbereich der Trennplatte etwa in Höhe der oberen Sitzlehnenkanten angeordnet.

Eine besonders interessante Ausführungsform bietet die Erfindung dadurch, daß die Trennplatte einen einen Durchladekanal mit Durchladeöffnung umschließenden Rahmen trägt, an welchem ein zu einem Stauvolumen verkleinerbarer, insbesondere zusammenschieb- oder -faltbarer sackartiger od. dgl.. Behälter für langgestrecktes Ladegut, z.B. für Skier, befestigt ist.

Eine zweckmäßige Ausgestaltung der Erfindung besteht darin, daß die Trennplatte zur Aufnahme des Rahmens etwa fluchtend mit einer zwischen den Sitzlehnen gebildeten Lücke ein Aufnahmeöffnung bildet.

In diesem Zusammenhang bildet die Erfindung eine besonders wichtige Eigenart dadurch, daß die Aufnahme, wie z.B. das Wickelgehäuse, in Ruheposition der Anordnung betrachtet, endseitig aus der Ebene der Trennplatte nach unten vorragt, derart, daß zwischen dem Laderaumboden und der ihm zugewandten Trennplatten-Breitfläche ein Stauraum zur Aufnahme des verkleinerten Behälters vorhanden ist.

Mit der zuletzt beschriebenen erfindungsgemäßen Ausführungsform erhält die Trennplatte eine weitere zusätzliche Funktion: Sie bildet die obere Begrenzung für den Stauraum des in seiner Ruheposition befindlichen verkleinerten Behälters, wie z.B. eines Skisacks. Dadurch, daß die Aufnahme, wie z.B. das Wickelgehäuse, in Ruheposition der Anordnung betrachtet, endseitig aus der Ebene der Trennplatte nach unten vorragt, verschwindet das Wickelgehäuse gänzlich aus dem Blickfeld des Betrachters.

Zweckmäßig ist es, die Aufnahmeöffnung für den Rahmen mit einem Deckel verschließbar zu halten.

Hierbei kann der Deckel eine zusätzliche Funktion erhalten. Und zwar ist der freie geschlossene Endbereich des Behälters am Deckel befestigt, derart, daß dieser eine Prallplatte für den ausgestreckten Behälter bildet.

Schließlich kann der Deckel so gestaltet sein, daß er Mittel zur Befestigung des freien geschlossenen Endbereichs des Behälters in dessen ausgestreckter Betriebsposition aufweist.

In der Zeichnung ist ein vorteilhaftes Ausführungsbeispiel der Erfindung anhand einer schematischen räumlichen Darstellung gezeigt.

In der Zeichnung ist hinter zwei Einzelsitzen 11 einer Großraumlimousine ein seitlich durch Radkästen 12 begrenzter Laderaumboden 13 dargestellt. Zwischen den beiden Einzelsitzen 11 mit Sitzlehnen 14 ist eine Lücke 15 vorhanden.

Unmittelbar oberhalb des Laderaumbodens 13 befindet sich eine Schwenkachse z eines Lagerelements 16 einer Trennplatte 17. Das Lagerelement 16 kooperiert mit einer nicht dargestellten, korrespondierenden karosserieseitigen Lageraufnahme.

Die Trennplatte 17 ist in zwei Positionen dargestellt, zum einen in ihrer unteren Ruheposition R und zum anderen in ihrer aufrechten, nahezu senkrechten Betriebsposition B.

An dem von der Schwenkachse z entfernten freien Endbereich F ist eine gehäuseartige Aufnahme in Form eines Wickelgehäuses 18 befestigt, aus welchem entgegen dem Rückstellmoment je eines Federmotors eine etwa planenartige Rückhaltebahn 19 und ein Rückhaltenetz 20 ausziehbar sind.

Die Rückhaltebahn 19 ist mit beidendseitig vorgesehenen Befestigungszapfen 21 in karosserieseitigen Befestigungssteckaufnahmen 22 lösbar arretiert. In ähnlicher Weise sind die Befestigungszapfen 23 des Rückhaltenetzes 20 in karosserieseitigen Befestigungssteckaufnahmen 24 lösbar gehalten.

Wie anhand der Betriebsposition B erkennbar, ist das Wickelgehäuse 18 etwa in Höhe der oberen Sitzlehnenkanten 25 angeordnet.

Das Wickelgehäuse 18 ragt, in der Ruheposition R der Anordnung betrachtet, einseitig aus der Ebene der Trennplatte 17 nach unten vor, derart, daß zwischen dem Laderaumboden 13 und der ihm zugewandten Trennplatten-Breitfläche 26 ein Stauraum 27 gebildet ist. Für den Fall, daß für einen besonderen Transport eine zusätzliche Ladefläche benötigt wird, kann es zweckmäßig sein, die hinteren Einzelsitze 11 aus der Großraumlimousine zu entfernen. Dabei dient in der Ruheposition R die obere Breitfläche 28 der Trennplatte 17 als zusätzliche Ladefläche.

In ihrer Ruheposition R ist die Trennplatte 17 mittels nur angedeuteter beweglicher Riegel 29, die durch Drucktasten 30 betätigt werden können, in nicht gezeigten karosserieseitigen Riegelaufnahmen lösbar arretiert.

Der Stauraum 27 dient der Aufnahme eines zusammenfaltbaren langgestreckten Behälters (s. Betriebsposition B), eines sogenannten Skisacks 31. Der zusammengefaltete Skisack 31 ist im Zusammenhang mit der Ruheposition R der Trennplatte 17 mit Strichlinien angedeutet.

Um den Skisack 31 in Betrieb zu nehmen, werden die Drucktasten 30 zwecks Lösens der Riegel 29 betätigt, so daß die Trennplatte 17 entsprechend dem Pfeil u nach oben in die aufrechte Betriebsposition B verschwenkt werden kann.

Auch in der aufrechten Betriebsposition B sorgen die Riegel 29 zusammen mit nicht gezeigten karosserieseitigen Riegelaufnahmen für eine lösbare Arretierung der Trennplatte 17. In der Betriebsposition B, in welcher der Skisack 31 in einer gestreckten Gebrauchslage dargestellt ist, wird auch deutlich, daß der Skisack 31 in einer Aufnahmeöffnung 33 der Trennplatte 17 mittels eines Rahmens 32 befestigt ist. In der Ruheposition R der Anordnung kann die Aufnahmeöffnung 33 mit einem abnehmbaren Deckel 34 geschlossen werden, der mit einer Griffaussparung 10 versehen ist.

In der Gebrauchsstellung des Skisacks 31 ist dieser mittels einer gurtartigen Haltevorrichtung 35 in karosserieseitigen Befestigungsaufnahmen 36 lösbar festgelegt.

Entsprechend einer nicht dargestellten Ausführungsform kann der Deckel 34 auch mit dem freien geschlossenen Endbereich 37 des Skisacks 31 fest verbunden sein, so daß der Deckel 34 als die Sicherheit erhöhende Prallplatte für das durch die Durchladeöffnung 38 in den Durchladekanal K eingesetzte langgestreckte Ladegut, (z.B. Skier, nicht gezeigt) dienen kann.

In der gezeigten Gebrauchsposition des Skisacks 31 erstreckt sich dieser durch die Lücke 15 zwischen den beiden Einzelsitzen 11 hindurch.

## Patentansprüche

1. Rückhaltevorrichtung für den Laderaum von Kraftfahrzeugen, wie z.B. für Kombinationskraftwagen oder Großraum-Personenkraftwagen, mit einer hinter einer Sitzreihe (11, 11) am Laderaumboden (13) an einer Schwenkachse (z) klappbar (bei 16) befestigten, von ihrer Ruheposition (R) am Laderaumboden (13) in ihre aufrechte Betriebsposition (B) hinter der Sitzreihe (11, 11) hochklappbaren und lösbar arretierbaren Trenneinheit (17), an deren von der Schwenkachse (z) entferntem freien Endbereich (F) zumindest ein aufwickelbares Rückhaltenetz (20) ausziehbar befestigt ist, dadurch gekennzeichnet, daß die Trenneinheit eine Trennplatte (17) ist, die in ihrer Ruheposition (R) mit ihrer oberen Breitfläche eine Ladefläche (28) bildet und in ihrer Betriebsposition (B) eine Trennwand darstellt, deren von der Schwenkachse (z) entfernter freier Endbereich (F) von einer Aufnahme, wie Wickelgehäuse (18) od. dgl., gebildet ist, aus welcher das Rückhaltenetz (20) und/oder eine Rückhaltebahn (19) ausziehbar ist.

2. Rückhaltevorrichtung nach Anspruch 1, dadurch gekennzeichnet, daß die Aufnahme (18) am freien Endbereich (F) der Trennplatte (17) etwa in Höhe der oberen Sitzlehnenkanten (25) angeordnet ist.

3. Rückhaltevorrichtung nach Anspruch 1 oder nach Anspruch 2, dadurch gekennzeichnet, daß die Trennplatte (17) einen einen Durchladekanal (K) mit Durchladeöffnung (38) umschließenden Rahmen (32) trägt, an welchem ein zu einem Stauvolumen verkleinerbarer, insbesondere zusammenschieb- oder -faltbarer, sackartiger od. dgl.. Behälter (31) für langgestrecktes Ladegut, wie z.B. für Skier, befestigt ist.

4. Rückhaltevorrichtung nach Anspruch 3, dadurch gekennzeichnet, daß die Trennplatte (17) zur Aufnahme des Rahmens (32) etwa fluchtend mit einer zwischen den Sitzen (11) gebildeten Lücke (15) eine Aufnahmeöffnung (33) bildet.

5. Rückhaltevorrichtung nach Anspruch 3 oder nach Anspruch 4, dadurch gekennzeichnet, daß die Aufnahme (18), in Ruheposition (R) der Anordnung betrachtet, einseitig aus der Ebene der Trennplatte (17) nach unten vorragt, derart, daß zwischen dem Laderaumboden (13) und der ihm zugewandten Trennplatten-Breitfläche (26) ein Stauraum (27) zur Aufnahme des verkleinerten Behälters (31) vorhanden ist.

6. Rückhaltevorrichtung nach den Ansprüchen 3 bis 5, dadurch gekennzeichnet, daß die Aufnahmeöffnung (33) für den Rahmen (32) mit einem Deckel (34) verschließbar ist.

7. Rückhaltevorrichtung nach Anspruch 6, dadurch gekennzeichnet, daß der freie geschlossene Endbereich (37) des Behälters (31) am Deckel (34) befestigt ist, derart, daß dieser eine Prallplatte für den ausgestreckten Behälter (31) bildet.

8. Rückhaltevorrichtung nach Anspruch 7, dadurch gekennzeichnet, daß der Deckel (34) Mittel zur Befestigung des freien geschlossenen Endbereichs (37) des Behälters (31) in dessen ausgestreckter Gebrauchsposition (bei B) aufweist.

## Claims

1. Restraining device for the loading space of motor vehicles such as, for example, dual-purpose vehicles or large-capacity passenger cars, having a dividing unit (17), which is fastened behind a row of seats (11, 11) to the loading space floor (13) so as to be hingeable (at 16) about a swivelling axis (z) and may be folded up from its position of rest (R) against the loading space floor (13) into its upright operational position (B) behind the row of seats (11, 11) and releasably locked and to whose free end region (F) remote from the swivelling axis (z) at least one roll-up restraining net (20) is withdrawably fastened, characterized in that the dividing unit is a dividing panel (17) which, in its position of rest (R), forms a loading surface (28) with its upper broad surface and, in its operational position (B), forms a dividing wall, of which the free end region (F) remote from the swivelling axis (z) is formed by a receiver such as a take-up housing (18) or the like, from which the restraining net (20) and/or a restraining web (19) is withdrawable.

2. Restraining device according to claim 1, characterized in that the receiver (18) is disposed at the free end region (F) of the dividing panel (17) substantially at the height of the top edges (25) of the seat backs.

3. Restraining device according to claim 1 or according to claim 2, characterized in that the dividing panel (17) carries a frame (32), which encloses a loading through-channel (K) with loading through-opening (38) and to which is fastened a container (31) in the manner of a bag or the like for elongate loads such as, for example, skis, which container may be reduced in size, in particular collapsed or folded up, into a stowage volume.

4. Restraining device according to claim 3, characterized in that the dividing panel (17), for receiving the frame (32), forms a receiving opening (33) substantially in alignment with a gap (15) formed between the seats (11).

5. Restraining device according to claim 3 or according to claim 4, characterized in that the receiver (18), when viewed in position of rest (R) of the arrangement, projects down from the plane of the dividing panel (17) at one end of the latter in such a way that a stowage area (27) for receiving the reduced-size container (31) is provided between the loading space floor (13) and the opposing broad surface (26) of the dividing panel.

6. Restraining device according to claims 3 to 5, characterized in that the receiving opening (33) for the frame (32) is closable by means of a cover (34).

7. Restraining device according to claim 6, characterized in that the free closed end region (37) of the container (31) is fastened to the cover (34) in such a way that the latter forms a baffle plate for the extended container (31).

8. Restraining device according to claim 7, characterized in that the cover (34) has means of fastening the free closed end region (37) of the container (31) in the latter's extended position of use (in B).

## Revendications

1. Dispositif de retenue pour le compartiment à bagages de véhicules automobiles, tels que par exemple des véhicules de type break ou familial à grand volume intérieur, comportant un ensemble de séparation (17) fixé rabattable (en 16) autour d'un axe de pivotement (z), derrière une rangée de sièges (11, 11), au plancher de compartiment à bagages (13), pouvant être relevé par rabattement, depuis sa position de repos (R) au plancher du compartiment à bagages (13) pour passer à sa position de fonctionnement dressée verticalement (B) derrière la rangée de siège (11, 11), et susceptible d'être bloqué de façon désolidarisable, ensemble de séparation (17) sur la zone d'extrémité (F) libre, éloignée de l'axe de pivotement (z), duquel au moins un filet de retenue (20), pouvant être enroulé, est fixé d'une façon permettant une extraction, caractérisé en ce que l'ensemble de séparation est une plaque de séparation (17) qui constitue dans sa position de repos (R), avec sa face large supérieure, une surface de chargement (28) et qui constitue dans sa position de fonctionnement (B) une paroi de séparation dont la zone d'extrémité (F) libre, éloignée de l'axe de pivotement (z), est constituée par un réceptacle, tel qu'un boîtier d'enroulement (18) ou analogue, d'où le filet de retenue (20) et/ou une bande de retenue (19) est susceptible d'être extrait(e).

2. Dispositif de retenue selon la revendication 1, caractérisé en ce que le réceptacle (18) est disposé sur la zone d'extrémité (F) libre de la plaque de séparation (17), à peu près à hauteur des arêtes supérieures (25) des dossiers de siège.

3. Dispositif de retenue selon la revendication 1 ou la revendication 2, caractérisée en ce que la plaque de séparation (17) porte un cadre (32) entourant un canal de chargement (K) doté d'une ouverture de passage de chargement (38), cadre auquel est fixé un récipient (31), susceptible d'être réduit de dimension pour prendre un volume rétracté, en particulier un récipient pouvant être diminué de volume par coulissement ou pliage, du genre d'un sac ou analogue, destiné à un produit de chargement allongé tel que, par exemple, des skis.

4. Dispositif de retenue selon la revendication 3, caractérisé en ce que la plaque de séparation (17) présente une ouverture de logement (33) destinée à recevoir le cadre (32) de façon à peu près alignée vis à vis d'un vide (15) constitué entre les sièges (11).

5. Dispositif de retenue selon la revendication 3 ou la revendication 4, caractérisé en ce que le réceptacle (18), lorsque le dispositif est observé en position de repos (R), fait saillie vers le bas d'un côté hors du plan de la plaque de séparation (17), de manière que, entre le fond (13) du compartiment à bagages et la face large (26) tournée vers lui de la plaque de séparation, soit constitué un espace de repli (27) destiné à recevoir le récipient (31) une fois que son volume a été diminué.

6. Dispositif de retenue selon les revendications 3 à 5, caractérisé en ce que l'ouverture de logement (33) destinée au cadre (32) est susceptible d'être obturé à l'aide d'un couvercle (34).

7. Dispositif de retenue selon la revendication 6, caractérisé en ce que la zone d'extrémité (37) fermée libre du récipient (31) est fixé au couvercle (34) de manière que celui-ci constitue une plaque d'impact pour le récipient (31) ayant été déployé.

8. Dispositif de retenue selon la revendication 7, caractérisé en ce que le couvercle (34) présente des moyens de fixation de la zone d'extrémité (37) fermée libre du récipient (31) lorsqu'il se trouve dans sa position d'utilisation déployée (en B).
